# EUROPEAN PATENT APPLICATION

(11) **EP 4 613 581 A1**
(43) Date of publication of application: **10.09.2025**
(21) Application number: 23884357.7
(22) Date of filing: 08.08.2023
(51) Int. Cl.: B60T 13/12

(54) **VEHICLE BRAKING SYSTEM AND VEHICLE HAVING SAME**

(30) Priority: 31.10.2022 CN 202222915995 U
(71) Applicant: BYD Company Limited, Shenzhen, Guangdong 518118 (CN)
(72) Inventor: LI, Bingge, Shenzhen, Guangdong 518118 (CN); XIONG, Wei, Shenzhen, Guangdong 518118 (CN); YAO, Yugang, Shenzhen, Guangdong 518118 (CN)
(74) Representative: Mathys & Squire
(86) International application number: PCT/CN2023/111627
(87) International publication number: WO 2024/093418

(57) **Abstract**

A vehicle braking system and a vehicle. The vehicle braking system (1) comprises a brake fluid control assembly (100), connecting oil pipes (300), and a brake master cylinder assembly (200). The brake fluid control assembly comprises an oil circuit block (110) and a pressure build-up device (120). The pressure build-up device is mounted on the oil circuit block. A side surface of the oil circuit block is provided with oil circuit block ports (111), one end of each connecting oil pipe is connected to the oil circuit block ports, and the brake master cylinder assembly and the brake fluid control assembly are arranged separately. An outer peripheral surface of the brake master cylinder assembly is provided with assembly ports (210), and the other end of each connecting oil pipe is connected to the assembly ports. The brake master cylinder assembly communicates with the brake fluid control assembly by means of the connecting oil pipes, and both the brake master cylinder assembly and the pressure build-up device can drive a brake fluid to be outputted by means of the oil circuit block.

## Description

### CROSS-REFERENCE TO RELATED APPLICATIONS

The present disclosure claims priority to Chinese Patent Application No. 202222915995.7, entitled "VEHICLE BRAKING SYSTEM AND VEHICLE HAVING SAME" and filed on October 31, 2022. The entire content of the above-referenced application is incorporated herein by reference.

### FIELD

The present disclosure relates to the technical field of vehicle brakes, and more specifically, to a vehicle braking system and a vehicle having same.

### BACKGROUND

In the related art, a vehicle braking system generally includes a brake fluid control assembly and a brake master cylinder assembly. Due to the limitations of mounting methods for the brake fluid control assembly and the brake master cylinder assembly, the vehicle braking system cannot be flexibly arranged according to a vehicle model. The structure of the vehicle braking system needs to be specifically designed according to the vehicle model. As a consequence, the research and development period is prolonged, and the applicability is poor.

### SUMMARY

The present disclosure aims to resolve at least one of the technical problems in the related art. In view of the above, an objective of the present disclosure is to provide a vehicle braking system. The vehicle braking system has advantages such as a flexible arrangement, a short research and development period, and high practicability.

The present disclosure further provides a vehicle having the above vehicle braking system.

In order to achieve the above objective, in a first aspect, a vehicle braking system is provided in embodiments of the present disclosure. The system includes: a brake fluid control assembly, the brake fluid control assembly including a manifold block and a pressure build-up device, the pressure build-up device being mounted on the manifold block, and a side surface of the manifold block being provided with a manifold block port; a connecting pipe, one end of the connecting oil pipe being connected to the manifold block port; and a brake master cylinder assembly, the brake master cylinder assembly and the brake fluid control assembly being arranged separately, and the brake master cylinder assembly being provided with an assembly port; the other end of the connecting oil pipe being connected to the assembly port, and the brake master cylinder assembly being in communication with the brake fluid control assembly through the connecting oil pipe; and both the brake master cylinder assembly and the pressure build-up device driving a brake fluid to be output via the manifold block.

The vehicle braking system according to the embodiments of the present disclosure has advantages such as a flexible arrangement method, a short research and development period, and high practicability.

According to some embodiments of the present disclosure, the other end of the connecting oil pipe is connected to one side of the brake master cylinder assembly facing the brake fluid control assembly.

According to some embodiments of the present disclosure, the brake master cylinder assembly and the brake fluid control assembly are arranged along a width direction of a vehicle body of a vehicle. The other end of the connecting oil pipe is connected to one side of the brake master cylinder assembly facing the brake fluid control assembly along the width direction of the vehicle body.

According to some embodiments of the present disclosure, the brake master cylinder assembly and the brake fluid control assembly are arranged along a height direction of the vehicle body of the vehicle, and the brake master cylinder assembly is located directly above the brake fluid control assembly. The other end of the connecting oil pipe is connected to a lower side of the brake master cylinder assembly.

In some embodiments of the present disclosure, a plurality of connecting oil pipes are provided; the one ends of the plurality of connecting oil pipes are connected to different sides or a same side of the manifold block; the other ends of the plurality of connecting oil pipes are connected to a same side of the brake master cylinder assembly and spaced apart along an axial direction of the brake master cylinder assembly. Alternatively, the other ends of the plurality of connecting oil pipes are connected to different sides of the brake master cylinder assembly.

According to some embodiments of the present disclosure, a first pipe opening is arranged on an outer peripheral surface of the brake master cylinder assembly. The brake master cylinder assembly and the brake fluid control assembly are spaced apart along a left-right direction. The first pipe opening is located on one side of the brake master cylinder assembly facing the brake fluid control assembly along the left-right direction.

According to some embodiments of the present disclosure, a second pipe opening is arranged on the outer peripheral surface of the brake master cylinder assembly. The brake master cylinder assembly and the brake fluid control assembly are spaced apart along an up-down direction. The brake master cylinder assembly is located above the brake fluid control assembly. The second pipe opening is located on the lower side of the brake master cylinder assembly.

According to some embodiments of the present disclosure, a first pipe opening is further arranged on the outer peripheral surface of the brake master cylinder assembly. The first pipe opening and the second pipe opening are arranged on the outer peripheral surface of the brake master cylinder assembly. The first pipe opening and the second pipe opening have different orientations. The other end of the connecting oil pipe is selectively connected to one of the first pipe opening and the second pipe opening.

According to some embodiments of the present disclosure, a fluid inlet is arranged on the outer peripheral surface of the brake master cylinder assembly. The fluid inlet is located on an upper side of the brake master cylinder assembly, and the fluid inlet is suitable for being in communication with an oil storage device of the vehicle. The other end of the connecting oil pipe and the fluid inlet are located on different sides of the outer peripheral surface of the brake master cylinder assembly.

According to some embodiments of the present disclosure, the oil storage device is an oil kettle.

According to some embodiments of the present disclosure, a fluid outlet is arranged on the side surface of the manifold block. The manifold block outputs brake fluid to a brake wheel cylinder through the fluid outlet.

According to some embodiments of the present disclosure, the pressure build-up device is a piston pump, and the piston pump is provided with a motor. The motor is mounted on the manifold block. The motor and the fluid outlet are located on a same side surface of the manifold block.

According to some embodiments of the present disclosure, the brake fluid control assembly further includes: an electric control device, the electric control device being mounted on the side surface of the manifold block, the electric control device being provided with a control valve, the control valve being electrically connected to the pressure build-up device, and the control valve controlling whether the pressure build-up device drives the brake fluid to be output via the manifold block according to a movement change of a brake pedal of the vehicle; and an oil supply device, the oil supply device being mounted on a top surface of the manifold block and configured to supply the brake fluid to the pressure build-up device, and a bottom surface of the manifold block being suitable for being connected to the vehicle body.

According to some embodiments of the present disclosure, the control valve is a solenoid valve.

In a second aspect, a vehicle is provided according to the embodiments of the present disclosure. The vehicle includes the vehicle braking system according to the embodiments in the first aspect of the present disclosure.

The vehicle according to the embodiments in the second aspect of the present disclosure uses the vehicle braking system according to the embodiments in the first aspect of the present disclosure, and thus has advantages such as a flexible arrangement, a short research and development period, and high practicability.

Additional aspects and advantages of the present disclosure will be set forth in part in the following description, and in part will become apparent from the following description, or will be learned by practice of the present disclosure.

### BRIEF DESCRIPTION OF THE DRAWINGS

The above and/or additional aspects and advantages of the present disclosure will become apparent and comprehensible in the description of embodiments made with reference to the following accompanying drawings.
FIG. 1 is a schematic structural diagram of a vehicle braking system according to an embodiment of the present disclosure;
FIG. 2 is a schematic structural diagram of a vehicle braking system according to another embodiment of the present disclosure;
FIG. 3 is a schematic structural diagram of a vehicle braking system according to yet another embodiment of the present disclosure;
FIG. 4 is a schematic structural diagram of a brake master cylinder assembly of a vehicle braking system according to an embodiment of the present disclosure;
FIG. 5 is a schematic structural diagram of a brake master cylinder assembly of a vehicle braking system in another view according to an embodiment of the present disclosure;
FIG. 6 is a schematic structural diagram of a brake master cylinder assembly of a vehicle braking system in yet another view according to an embodiment of the present disclosure;
FIG. 7 is a sectional view of a brake master cylinder assembly of a vehicle braking system according to an embodiment of the present disclosure;
FIG. 8 is a schematic structural diagram of a manifold block of a vehicle braking system according to an embodiment of the present disclosure;
FIG. 9 is a schematic structural diagram of a manifold block of a vehicle braking system in another view according to an embodiment of the present disclosure;
FIG. 10 is a schematic block diagram of a vehicle braking system according to an embodiment of the present disclosure;
FIG. 11 is a schematic block diagram of a vehicle braking system according to an embodiment of the present disclosure; and
FIG. 12 is a schematic block diagram of a vehicle according to an embodiment of the present disclosure.

In the drawings:
vehicle braking system 1,
brake fluid control assembly 100, manifold block 110, manifold block port 111, fluid outlet 112, pressure build-up device 120, motor 121, electric control device 130, control valve 1301, oil supply device 140, brake wheel cylinder 150,
brake master cylinder assembly 200, assembly port 210, first pipe opening 220, second pipe opening 230, fluid inlet 240,
connecting oil pipe 300, and transverse beam 400.

### DETAILED DESCRIPTION

Embodiments described with reference to the accompanying drawings are illustrative, and the embodiments of the present disclosure are described in detail below.

In the description of the present disclosure, it should be understood that orientation or position relations indicated by the terms such as "center", "longitudinal", "transverse", "length", "width", "thickness", "on", "below", "front", "rear", "left", "right", "vertical", "horizontal", "top", "bottom", "inside", "outside", "clockwise", "anticlockwise", "axial direction", "radial direction", and "peripheral direction" are based on orientation or position relations shown in the accompanying drawings, and are used only for ease and brevity of the description of the present disclosure, rather than indicating or implying that the mentioned device or component must have a particular orientation or must be arranged and operated in a particular orientation. Thus, such terms should not be interpreted as limiting the present disclosure.

In the description of the present disclosure, "a plurality of" means two or more.

A vehicle braking system 1 according to the embodiments of the present disclosure is described below with reference to the accompanying drawings.

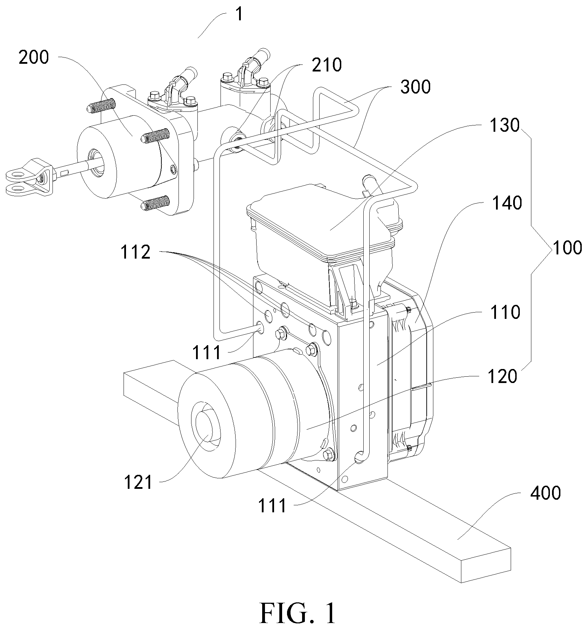

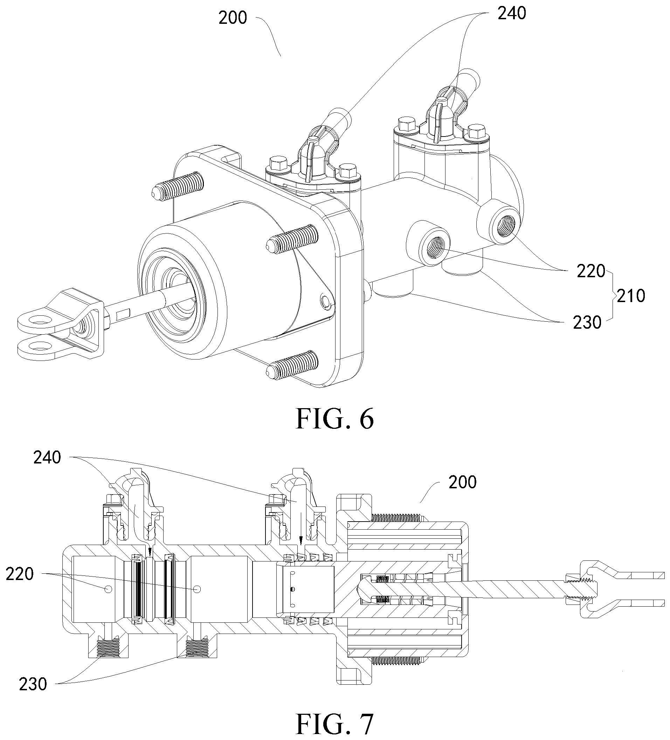

As shown in FIG. 1 to FIG. 11, the vehicle braking system 1 according to the embodiments of the present disclosure includes a brake fluid control assembly 100, a connecting oil pipe 300, and a brake master cylinder assembly 200.

The brake fluid control assembly 100 includes a manifold block 110 and a pressure build-up device 120. The pressure build-up device 120 is mounted on the manifold block 110. A side surface of the manifold block 110 is provided with a manifold block port, and one end of the connecting oil pipe 300 is connected to the manifold block port 111. The brake master cylinder assembly 200 and the brake fluid control assembly 100 are arranged separately. The brake master cylinder assembly 200 is provided with an assembly port 210. The other end of the connecting oil pipe 300 is connected to the assembly port 210. The brake master cylinder assembly 200 is in communication with the brake fluid control assembly 100 through the connecting oil pipe 300. Both the brake master cylinder assembly 200 and the pressure build-up device 120 can drive a brake fluid to be output via the manifold block 110. In the embodiment, an outer peripheral surface of the brake master cylinder assembly 200 is provided with the assembly port. In another embodiment, an end surface of the brake master cylinder assembly 200 is provided with the assembly port.

For example, the vehicle braking system 1 may include a brake pedal, a sensor, and a brake wheel cylinder 150. The brake pedal is in transmission connection to the brake master cylinder assembly 200. The sensor is electrically connected to the pressure build-up device 120. The sensor is configured to detect a movement change of the brake pedal. The brake wheel cylinder 150 is in communication with the manifold block 110. The brake wheel cylinder 150 is configured to receive the brake fluid output by the manifold block 110.

When the brake pedal is pressed down, the sensor may detect a displacement change or an angle change of the brake pedal. For example, the sensor may be a displacement sensor or an angle sensor. Then, the sensor transmits an electrical signal to the pressure build-up device 120, so as to control the pressure build-up device 120 to build up pressure. Thus, the brake fluid is pressed into the brake wheel cylinder 150, so that the brake wheel cylinder 150 brakes the wheels.

When the brake pedal is pressed down, if the vehicle braking system 1 is not powered, the sensor is damaged, or the pressure build-up device 120 is damaged. As a consequence, the pressure build-up device 120 cannot build up the pressure, and the brake master cylinder assembly 200 is pushed by the brake pedal. The brake master cylinder assembly 200 presses the brake fluid into the brake wheel cylinder 150, so that the brake wheel cylinder 150 brakes the wheels.

In this way, the vehicle braking system 1 has two brake manners. In one manner, a brake is performed in a manner of pure mechanical control through the brake master cylinder assembly 200. In the other manner, a brake is performed in a manner of combining mechanical control and electric control through the cooperation between the pressure build-up device 120 and the sensor. Thus, brake accuracy and reliability of the vehicle braking system 1 can be ensured.

In the vehicle braking system 1 according to the embodiments of the present disclosure, the brake master cylinder assembly 200 and the brake fluid control assembly 100 are arranged separately. Compared with a vehicle braking system in the related art that a brake master cylinder assembly and a brake fluid control assembly are mounted integrally, the brake master cylinder assembly 200 and the brake fluid control assembly 100 of the vehicle braking system 1 according to the embodiments of the present disclosure are arranged independently. Thus, arrangement positions and mounting methods can be more flexible, and space utilization can be improved. Moreover, disassembly and assembly are convenient, and the brake master cylinder assembly 200 and the brake fluid control assembly 100 do not need to occupy a large amount of space separately.

In the embodiment, in a case that the brake master cylinder assembly 200 and the brake fluid control assembly 100 are arranged separately, the brake master cylinder assembly 200 and the brake fluid control assembly 100 are separated and mounted independently. In another embodiment, in a case that the brake master cylinder assembly 200 and the brake fluid control assembly 100 are arranged separately, a cylinder body of the brake master cylinder assembly 200 and a body of the manifold block 110 may not be connected integrally. In this case, the brake master cylinder assembly 200 is detachably mounted on the brake fluid control assembly 100 through threaded connection, etc. The brake master cylinder assembly 200 includes the cylinder body and a piston located in the cylinder body. The movement of the piston in the cylinder body drives the brake fluid to flow.

The brake fluid control assembly 100 is configured to include the manifold block 110 and the pressure build-up device 120. The pressure build-up device 120 is mounted on the manifold block 110. The brake master cylinder assembly 200 is in communication with the manifold block 110 through the connecting oil pipe 300. Both the brake master cylinder assembly 200 and the pressure build-up device 120 can drive the brake fluid to be output via the manifold block 110. In other words, the brake master cylinder assembly 200 can independently drive the brake fluid to be output via the manifold block 110. The pressure build-up device 120 can independently drive the brake fluid to be output via the manifold block 110. Alternatively, the brake master cylinder assembly 200 and the pressure build-up device 120 can independently drive the brake fluid to be output via the manifold block 110.

An oil circuit may be arranged in the manifold block 110. The oil circuit is in communication with the pressure build-up device 120, the brake master cylinder assembly 200, and the brake wheel cylinder 150 separately. Thus, both the pressure build-up device 120 and the brake master cylinder assembly 200 can output the brake fluid to the brake wheel cylinder 150 via the manifold block 110. Both the pressure build-up device 120 and the brake master cylinder assembly 200 use the oil circuit in the manifold block 110. Thus, an integration degree of the oil circuit of the vehicle braking system 1 can be improved, and the space occupation and processing complexity of the vehicle braking system 1 can be reduced.

Also, one end of the connecting oil pipe 300 is connected to a manifold block port 111 on a side surface of the manifold block 110, and the other end of the connecting oil pipe 300 is connected to an assembly port 210 on an outer peripheral surface of the brake master cylinder assembly 200. The two ends of the connecting oil pipe 300 are in communication with the manifold block port 111 and the assembly port 210 respectively. The brake master cylinder assembly 200 outputs the brake fluid to the manifold block 110 through the connecting oil pipe 300.

In this way, connection methods between the connecting oil pipe 300 and the manifold block 110 are more diversified, and connection methods between the connecting oil pipe 300 and the brake master cylinder assembly 200 are also more diversified. Thus, an arrangement method among the manifold block 110, the connecting oil pipe 300, and the brake master cylinder assembly 200 is more flexible. The vehicle braking system 1 can be adjusted flexibly according to a vehicle model, and adaptability of the vehicle braking system 1 is high. Accordingly, it is not required to redesign the vehicle braking system 1 according to the vehicle model, so that a research and development period is shortened.

Thus, the vehicle braking system 1 according to the embodiments of the present disclosure has advantages such as a flexible arrangement, a short research and development period, and high practicability.

According to some specific embodiments of the present disclosure, as shown in FIG. 1 to FIG. 3, the other end of the connecting oil pipe 300 is connected to one side of the brake master cylinder assembly 200 facing the brake fluid control assembly 100. In this way, the length of the connecting oil pipe 300 is shorter, so that the cost and weight are reduced. Also, the length of the connecting oil pipe 300 is reduced, so that resistance to flow of the brake fluid in the connecting oil pipe 300 is correspondingly reduced.

According to some specific embodiments of the present disclosure, as shown in FIG. 1 to FIG. 3, a plurality of connecting oil pipes 300 are provided. In this way, a greater flow rate of the brake fluid output by the brake master cylinder assembly 200 to the manifold block 110 is achieved. Thus, a plurality of wheels of the vehicle are simultaneously braked, the brake effect is better, and the brake efficiency is higher.

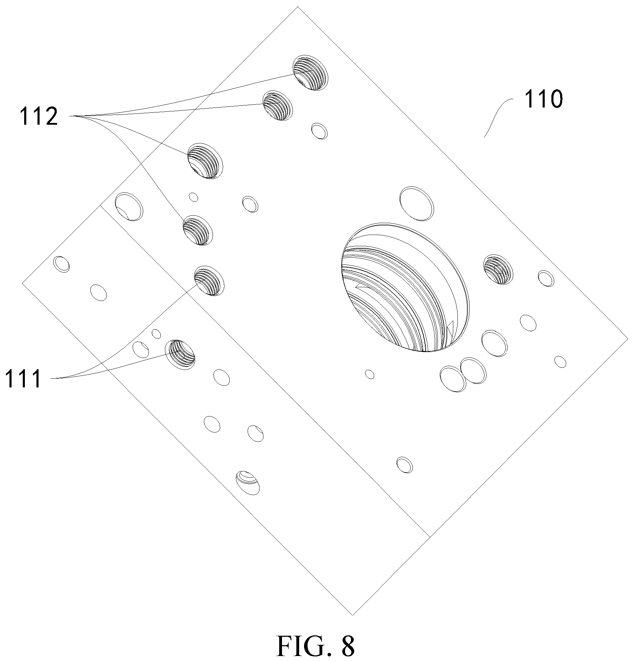

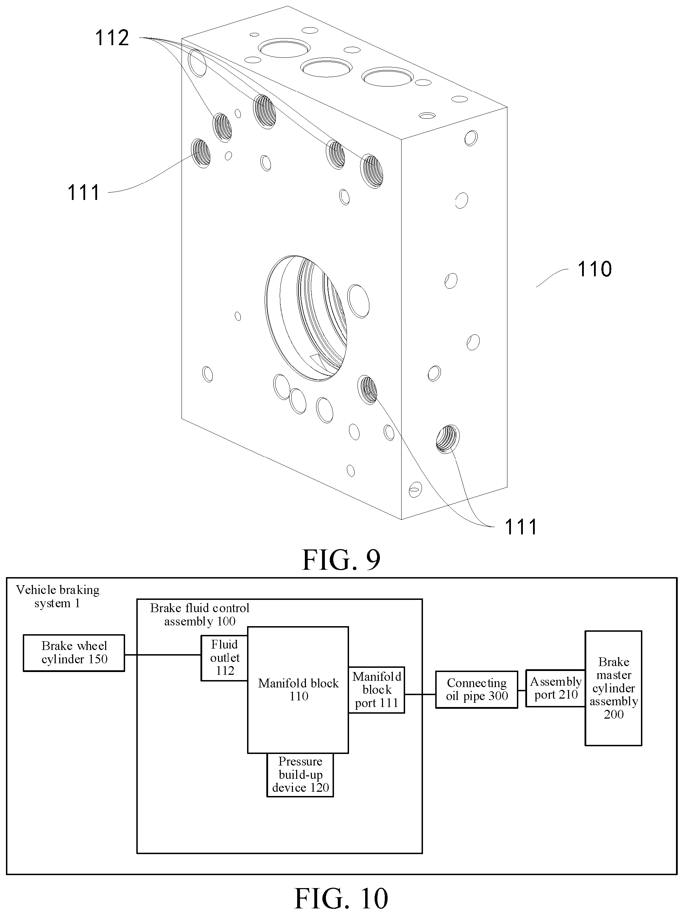

Also, as shown in FIG. 8 and FIG. 9, one ends of the plurality of connecting oil pipes 300 are connected to different sides or a same side of the manifold block 110. In other words, the manifold block ports 111 may be arranged on different sides or the same side of the manifold block 110. In this way, connection methods between the connecting oil pipes 300 and the manifold block 110 are more diversified and flexible. When the vehicle braking system 1 is applied to different vehicle models, the connection method between the manifold block 110 and the connecting oil pipes 300 can be adjusted in time according to the vehicle models, so that the applicability of the vehicle braking system 1 can be improved.

In addition, the other ends of the plurality of connecting oil pipes 300 are connected to the same side of the brake master cylinder assembly 200 and spaced apart along an axial direction of the brake master cylinder assembly 200. Alternatively, the other ends of the plurality of connecting oil pipes 300 are connected to different sides of the brake master cylinder assembly 200. In other words, the assembly ports 210 may be arranged on the same side or different sides of the brake master cylinder assembly 200. In this way, the connection methods between the connecting oil pipes 300 and the brake master cylinder assembly 200 are more diversified and flexible. When the vehicle braking system 1 is applied to different vehicle forms, the connection methods between the brake master cylinder assembly 200 and the connecting oil pipes 300 can be adjusted in time according to the vehicle models, so that the applicability of the vehicle braking system 1 can be improved.

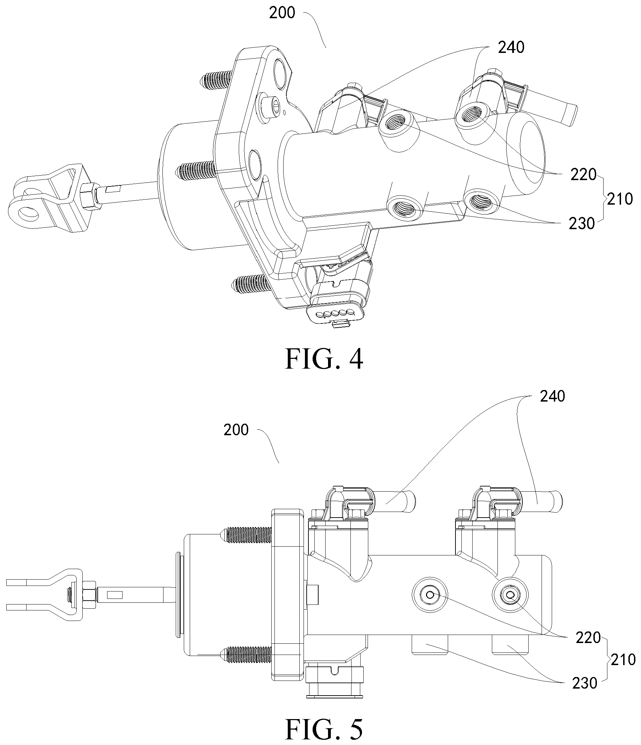

According to some specific embodiments of the present disclosure, as shown in FIG. 4 to FIG. 7, a first pipe opening 220 and a second pipe opening 230 are arranged on an outer peripheral surface of the brake master cylinder assembly 200. The first pipe opening 220 and the second pipe opening 230 have different orientations. The other ends of the connecting oil pipes 300 may be selectively connected to one of the first pipe opening 220 and the second pipe opening 230. The first pipe opening 220 and the second pipe opening 230 may be spaced apart along a peripheral direction of the brake master cylinder assembly 200. Moreover, the assembly port 210 includes the first pipe opening 220 and the second pipe opening 230.

For example, a relative position between the brake master cylinder assembly 200 and the manifold block 110 may vary with the vehicle model. By providing the first pipe opening 220 and the second pipe opening 230, the other ends of the connecting oil pipes 300 may be selectively connected to a closer pipe opening of the manifold block 110. For example, in a case where a distance between the first pipe opening 220 and the manifold block 110 is less than that between the second pipe opening 230 and the manifold block 110, the connecting oil pipe 300 is connected to the first pipe opening 220, and the second pipe opening 230 needs to be closed. Thus, the brake fluid in the brake master cylinder assembly 200 is protected against leakage via the second pipe opening 230. In a case where a distance between the first pipe opening 220 and the manifold block 110 is greater than that between the second pipe opening 230 and the manifold block 110, the connecting oil pipe 300 is connected to the second pipe opening 230, and the first pipe opening 220 needs to be closed. Thus, the brake fluid in the brake master cylinder assembly 200 is protected against leakage via the first pipe opening 220.

In this way, the length of the connecting oil pipe 300 can be shorter. Moreover, more connection methods between the other end of the connecting oil pipe 300 and the brake master cylinder assembly 200 can be achieved. Thus, the applicability of the vehicle braking system 1 can be improved.

According to some specific embodiments of the present disclosure, either the first pipe opening 220 or the second pipe opening 230 may be provided on the brake master cylinder assembly 200. Details are as follows.

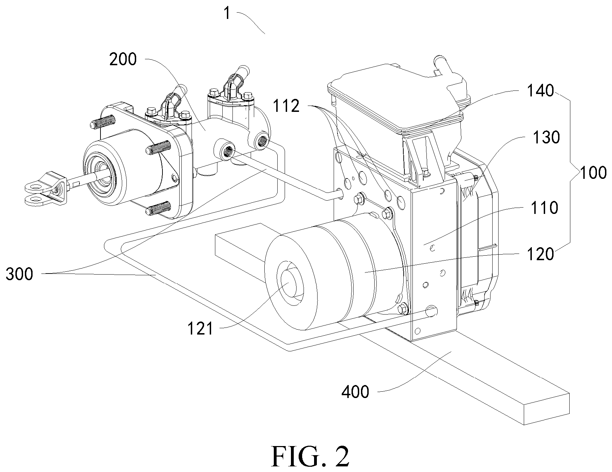

According to some specific embodiments of the present disclosure, as shown in FIG. 1 and FIG. 2, the brake master cylinder assembly 200 and the brake fluid control assembly 100 are arranged along a width direction (i.e. a left-right direction) of the vehicle body. In this way, the brake master cylinder assembly 200 and the brake fluid control assembly 100 do not occupy excessive sizes along a length direction (i.e. a front-rear direction) and a height direction (i.e. an up-down direction) of the vehicle body. In a case that the brake master cylinder assembly 200 and the brake fluid control assembly 100 are arranged along a left-right direction, they are arranged along the left-right direction with a direction from a vehicle tail to a vehicle head as a forward direction. In the embodiment, the brake master cylinder assembly 200 is on the left, and the brake fluid control assembly 100 is on the right. In another embodiment, the brake master cylinder assembly 200 or may be on the right, and the brake fluid control assembly 100 or may be on the left. In other embodiments, in a case that the brake master cylinder assembly 200 and the brake fluid control assembly 100 are arranged along a left-right direction, they may be arranged along a direction rather than the front-rear direction of the vehicle body. For example, the brake master cylinder assembly 200 is located at a rear right portion with the direction from the vehicle tail to the vehicle head as the forward direction, and the brake fluid control assembly 100 is located at a front left portion with the direction from the vehicle tail to the vehicle head as the forward direction.

Also, the first pipe opening 220 is provided, and the first pipe opening 220 is located on one side of the brake master cylinder assembly 200 facing the brake fluid control assembly 100 along the left-right direction. In other words, the other end of the connecting oil pipe 300 is connected to one side of the brake master cylinder assembly 200 facing the brake fluid control assembly 100 along the width direction of the vehicle body. In this way, the length of the connecting oil pipe 300 is shorter, so that the cost and weight are reduced. Also, the length of the connecting oil pipe 300 is reduced, so that resistance to flow of the brake fluid in the connecting oil pipe 300 is correspondingly reduced.

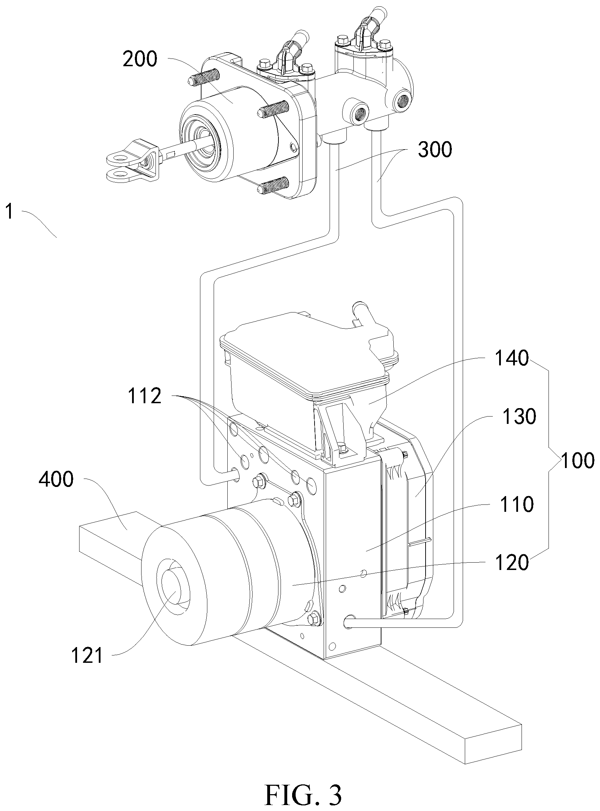

According to some specific embodiments of the present disclosure, as shown in FIG. 3, the brake master cylinder assembly 200 and the brake fluid control assembly 100 are arranged along the height direction (i.e. the up-down direction) of the vehicle body, and the brake master cylinder assembly 200 is located directly above the brake fluid control assembly 100. In this way, the brake master cylinder assembly 200 and the brake fluid control assembly 100 do not occupy excessive sizes along the length direction (i.e. the front-rear direction) and the width direction (i.e. the left-right direction) of the vehicle body. Moreover, under the effect of gravity, the brake fluid in the brake master cylinder assembly 200 is more likely to flow to the manifold block 110 through the connecting oil pipe 300, so that brake response efficiency is improved. In another embodiment, the brake master cylinder assembly 200 and the brake fluid control assembly 100 are arranged along the height direction (i.e. the up-down direction) of the vehicle body. Moreover, in a vertical direction, the brake master cylinder assembly 200 is located obliquely above the brake fluid control assembly 100.

Also, the second pipe opening 230 is provided, and the second pipe opening 230 is located at a lower side of the brake master cylinder assembly 200. In other words, the other end of the connecting oil pipe 300 is connected to the lower side of the brake master cylinder assembly 200. In this way, the length of the connecting oil pipe 300 is shorter, so that the cost and weight are reduced. Also, the length of the connecting oil pipe 300 is reduced, so that resistance to flow of the brake fluid in the connecting oil pipe 300 is correspondingly reduced.

According to some specific embodiments of the present disclosure, as shown in FIG. 4 to FIG. 7, a fluid inlet 240 is arranged on the outer peripheral surface of the brake master cylinder assembly 200. The fluid inlet 240 is located at an upper side of the brake master cylinder assembly 200. The fluid inlet 240 is suitable for being in communication with an oil storage device of a vehicle. The other end of the connecting oil pipe 300 and the fluid inlet 240 are located at different sides of the outer peripheral surface of the brake master cylinder assembly 200.

For example, the oil storage device may be an oil kettle. By providing the fluid inlet 240, the oil storage device can supplement the brake master cylinder assembly 200 with the brake fluid. Thus, the brake master cylinder assembly 200 is repeatedly used multiple times. Moreover, the fluid inlet 240 and the other end of the connecting oil pipe 300 are not located on a same side of the outer peripheral surface of the brake master cylinder assembly 200. In this way, interference between a pipeline in communication with the fluid inlet 240 and the connecting oil pipe 300 can be avoided. Also, the fluid inlet 240 is located on the upper side of the brake master cylinder assembly 200, and the brake fluid entering through the fluid inlet 240 flows into the brake master cylinder assembly 200 under the effect of gravity.

According to some specific embodiments of the present disclosure, as shown in FIG. 8 to FIG. 11, a fluid outlet 112 is arranged on the side surface of the manifold block 110, and the manifold block 110 outputs the brake fluid to the brake wheel cylinder 150 through the fluid outlet 112. In this way, the fluid outlet 112 is also arranged on the side surface of the manifold block 110, so that the fluid outlet 112 does not occupy the top surface and the bottom surface of the manifold block 110, and utilization of the side surface of the manifold block 110 is improved.

For example, the pressure build-up device 120 is a piston pump, and the piston pump is provided with a motor 121. The motor 121 is mounted on the manifold block 110, and the motor 121 and the fluid outlet 112 are located on the same side surface of the manifold block 110. The motor 121 and the fluid outlet 112 are located on the same side surface of the manifold block 110, so that utilization of the side surface of the manifold block 110 for mounting the motor 121 can be improved.

According to some specific embodiments of the present disclosure, as shown in FIG. 1 to FIG. 3, the brake fluid control assembly 100 further includes an electric control device 130 and an oil supply device 140. The oil supply device 140 is a device that can supply the brake fluid. In the embodiment, the oil supply device 140 is the oil storage device (for example, the oil kettle), and flow power of the brake fluid is sourced from an action of the piston of the brake master cylinder assembly 200, or an action of the piston of the pressure build-up device 120. In other embodiments, the oil supply device 140 may include an oil storage device (for example, the oil kettle) and a power device that assists in supplying fluid power to the oil storage device.

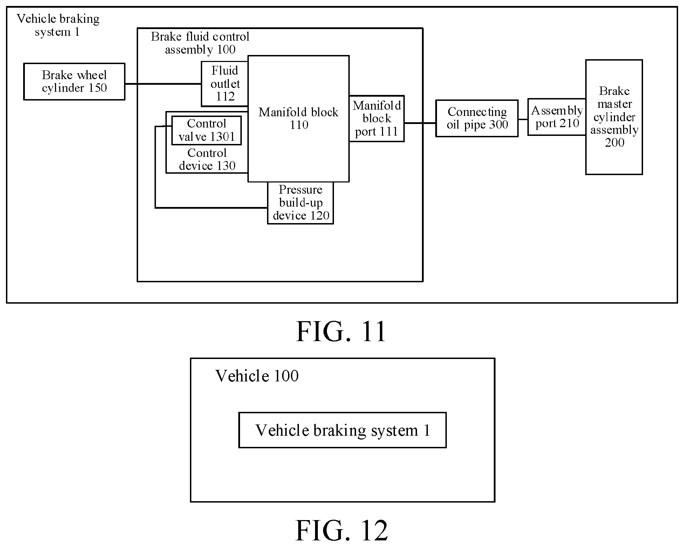

As shown in FIG. 2 and FIG. 11, the electric control device 130 is mounted on the manifold block 110, and the electric control device and the motor 121 are arranged on two opposite sides of the manifold block 110 respectively. The electric control device 130 is provided with a control valve 1301. The control valve 1301 is electrically connected to the pressure build-up device 120. The control valve 1301 controls whether the pressure build-up device 120 drives the brake fluid to be output via the manifold block 110 according to a movement change of the brake pedal of the vehicle. The control valve 1301 may be a solenoid valve.

By arranging the electric control device 130, the electric control device 130 may be connected to the sensor, so as to obtain an electrical signal fed back by the sensor. The electric control device 130 may calculate a displacement distance or a rotation angle of the brake pedal according to the electrical signal fed back by the sensor. Thus, pressure of the pressure build-up device 120 can be accurately controlled, so that a brake force of the vehicle is matched with a brake force required by a driver, and brake experience is improved.

The oil supply device 140 is mounted on the top surface of the manifold block 110. The oil supply device 140 is connected to the piston pump and configured to supply the brake fluid to the piston pump. The oil supply device 140 and the fluid inlet 240 may be connected to the same oil kettle. Alternatively, the oil supply device 140 and the fluid inlet 240 may be connected to different oil kettles. Alternatively, the oil supply device 140 directly supplies the brake fluid to the brake master cylinder assembly 200 through the fluid inlet 240. The bottom surface of the manifold block 110 is suitable for being connected to the vehicle body. The bottom surface of the manifold block 110 may be mounted on a transverse beam 400 of a front cabin.

By arranging the oil supply device 140, the brake fluid can be supplied to the piston pump, so as to facilitate repeated use of the piston pump and prepare for next pressure build-up for braking by the piston pump.

In this way, the transverse beam 400 of the front cabin may support the manifold block 110. The manifold block 110 does not need to be suspended in the front cabin, and it does not need to additionally arrange a bracket for supporting the manifold block 110. The manifold block 110 is mounted stably, and the space occupation is reduced. Moreover, the oil supply device 140 is mounted on the top surface of the manifold block 110. The manifold block 110 can support the oil supply device 140. Also, the oil supply device 140 does not interfere with the transverse beam 400 of the front cabin and the pressure build-up device 120. Thus, the brake fluid control assembly 100 can be more convenient to arrange, and the brake fluid in the oil supply device 140 can flow to the piston pump under the effect of gravity, so that the use is more convenient.

A vehicle 100 according to the embodiments of the present disclosure is described below with reference to FIG. 12. The vehicle 100 includes the vehicle braking system 1 according to the above embodiment of the present disclosure.

The vehicle according to the embodiments of the present disclosure uses the vehicle braking system 1 according to the above embodiment of the present disclosure, and thus has advantages such as flexible arrangement, a short research and development period, and high practicability.

Other configurations and operations of the vehicle braking system 1 and the vehicle having same according to the embodiments of the present disclosure are known to those of ordinary skill in the art, and are not described in detail herein.

In the descriptions of the description, the descriptions with reference to the terms "an embodiment", "some embodiments", "an illustrative embodiment", "an example", "a specific example", "some examples", etc. indicate that specific characteristics, structures, materials, or features described with reference to the embodiment or example are included in at least one embodiment or example of the present disclosure. In the description, illustrative descriptions of the above terms do not necessarily refer to a same embodiment or example.

Although the embodiments of the present disclosure have been shown and described, those of ordinary skill in the art can understand that various changes, modifications, replacements, and variations can be made to the embodiments without departing from the principles and spirit of the present disclosure, and the scope of the present disclosure is defined by the claims and their equivalents.

## Claims

1. A vehicle braking system (1), comprising:
a brake fluid control assembly (100), the brake fluid control assembly (100) comprising:
a manifold block (110), a side surface of the manifold block (110) being provided with a manifold block port (111);
a pressure build-up device (120), the pressure build-up device (120) being mounted on the manifold block (110);
a connecting oil pipe (300), one end of the connecting oil pipe (300) being connected to the manifold block port (111); and
a brake master cylinder assembly (200), the brake master cylinder assembly (200) and the brake fluid control assembly (100) being arranged separately, and the brake master cylinder assembly (200) being provided with an assembly port (210); the other end of the connecting oil pipe (300) being connected to the assembly port (210), and the brake master cylinder assembly (200) being in communication with the brake fluid control assembly (100) through the connecting oil pipe (300); and both the brake master cylinder assembly (200) and the pressure build-up device (120) driving a brake fluid to be output via the manifold block (110).

2. The vehicle braking system (1) according to claim 1, wherein the other end of the connecting oil pipe (300) is connected to one side of the brake master cylinder assembly (200) facing the brake fluid control assembly (100).

3. The vehicle braking system (1) according to claim 1 or 2, wherein the brake master cylinder assembly (200) and the brake fluid control assembly (100) are arranged along a width direction of a vehicle body of a vehicle; and the other end of the connecting oil pipe (300) is connected to one side of the brake master cylinder assembly (200) facing the brake fluid control assembly (100) along the width direction of the vehicle body.

4. The vehicle braking system (1) according to any one of claims 1 to 3, wherein the brake master cylinder assembly (200) and the brake fluid control assembly (100) are arranged along a height direction of the vehicle body of the vehicle, and the brake master cylinder assembly (200) is located directly above the brake fluid control assembly (100); and the other end of the connecting oil pipe (300) is connected to a lower side of the brake master cylinder assembly (200).

5. The vehicle braking system (1) according to any one of claims 1 to 4, wherein a plurality of connecting oil pipes (300) are provided;
the one ends of the plurality of connecting oil pipes (300) are connected to different sides or a same side of the manifold block (110);
the other ends of the plurality of connecting oil pipes (300) are connected to a same side of the brake master cylinder assembly (200) and spaced apart along an axial direction of the brake master cylinder assembly (200); and alternatively, the other ends of the plurality of connecting oil pipes (300) are connected to different sides of the brake master cylinder assembly (200).

6. The vehicle braking system (1) according to any one of claims 1 to 5, wherein a first pipe opening (220) is arranged on an outer peripheral surface of the brake master cylinder assembly (200), the brake master cylinder assembly (200) and the brake fluid control assembly (100) are spaced apart along a left-right direction, and the first pipe opening (220) is located on one side of the brake master cylinder assembly (200) facing the brake fluid control assembly (100) along the left-right direction.

7. The vehicle braking system (1) according to any one of claims 1 to 6, wherein a second pipe opening (230) is arranged on the outer peripheral surface of the brake master cylinder assembly (200), the brake master cylinder assembly (200) and the brake fluid control assembly (100) are spaced apart along an up-down direction, the brake master cylinder assembly (200) is located above the brake fluid control assembly (100), and the second pipe opening (230) is located on the lower side of the brake master cylinder assembly (200).

8. The vehicle braking system (1) according to claim 7, wherein a first pipe opening (220) is further arranged on the outer peripheral surface of the brake master cylinder assembly (200), the first pipe opening (220) and the second pipe opening (230) have different orientations, and the other end of the connecting oil pipe (300) is selectively connected to one of the first pipe opening (220) and the second pipe opening (230).

9. The vehicle braking system (1) according to any one of claims 1 to 8, wherein a fluid inlet (240) is arranged on the outer peripheral surface of the brake master cylinder assembly (200), the fluid inlet (240) is located on an upper side of the brake master cylinder assembly (200), and the fluid inlet (240) is suitable for being in communication with an oil storage device of the vehicle; and the other end of the connecting oil pipe (300) and the fluid inlet (240) are located on different sides of the outer peripheral surface of the brake master cylinder assembly (200).

10. The vehicle braking system (1) according to claim 9, wherein the oil storage device is an oil kettle.

11. The vehicle braking system (1) according to any one of claims 1 to 10, wherein a fluid outlet (112) is arranged on the side surface of the manifold block (110), and the manifold block (110) outputs brake fluid to a brake wheel cylinder (150) through the fluid outlet (112).

12. The vehicle braking system (1) according to claim 11, wherein the pressure build-up device (120) is a piston pump, the piston pump is provided with a motor (121), the motor (121) is mounted on the manifold block (110), and the motor (121) and the fluid outlet (112) are located on a same side surface of the manifold block (110).

13. The vehicle braking system (1) according to any one of claims 1 to 12, wherein the brake fluid control assembly (100) further comprises:
an electric control device (130), the electric control device (130) being mounted on the side surface of the manifold block (110), the electric control device (130) being provided with a control valve (1301), the control valve (1301) being electrically connected to the pressure build-up device (120), and the control valve (1301) controlling whether the pressure build-up device (120) drives the brake fluid to be output via the manifold block (110) according to a movement change of a brake pedal of the vehicle; and
an oil supply device (140), the oil supply device (140) being mounted on a top surface of the manifold block (110) and configured to supply the brake fluid to the pressure build-up device (120), and a bottom surface of the manifold block (110) being suitable for being connected to the vehicle body.

14. The vehicle braking system (1) according to claim 13, wherein the control valve (1301) is a solenoid valve.

15. A vehicle (100), comprising: the vehicle braking system (1) according to any of claims 1 to 14.
